# EUROPEAN PATENT APPLICATION

(11) **EP 3 528 568 A1**
(43) Date of publication of application: **21.08.2019**
(21) Application number: 17860816.2
(22) Date of filing: 27.09.2017
(51) Int. Cl.: H04W 72/04

(54) **METHOD AND APPARATUS FOR ALLOCATING CHANNEL RESOURCES, AND COMPUTER STORAGE MEDIUM**

(30) Priority: 13.10.2016 CN 201610893392
(71) Applicant: ZTE Corporation, Shenzhen, Guangdong 518057 (CN)
(72) Inventor: XU, Long, Shenzhen Guangdong 518057 (CN)
(74) Representative: Taor, Simon Edward William
(86) International application number: PCT/CN2017/103677
(87) International publication number: WO 2018/068640

(57) **Abstract**

Disclosed are a method and apparatus for allocating channel resources, and a computer storage medium. The method for allocating channel resources comprises: determining a channel condition of a link where a terminal is located and the amount of service data to be transmitted by the terminal; determining at least one set of transmission information to be chosen by the terminal, and when the transmission information to be chosen is used by the terminal, a channel state meets the requirements for the channel condition of the link where the terminal is located, and the amount of transmitted data meets the requirements for the amount of service data to be transmitted by the terminal; taking a set of transmission information to be chosen, which occupies the minimum of the total amount of channel resources, as transmission information used by the terminal; and informing the terminal of the transmission information used by the terminal.

## Description

### CROSS REFERENCE

This application is based upon and claims priority to Chinese Patent Application No. 201610893392.8, filed on October 13, 2016 the entire contents thereof are incorporated herein by reference.

### TECHNICAL FIELD

The present disclosure relates to the field of communication technologies, and more particularly, to a method and an apparatus for allocating channel resources, and a computer storage medium.

### BACKGROUND

With development of Long Term Evolution (LTE) technology, low-power and low-cost Machine Type Communication (MTC) technology is gradually standardized. Machine type communication is a key technology for implementing Machine to Machine (M2M) applications and achieving Internet of Things interconnection. Technical specifications of Category-M (CAT.M) terminal is newly defined in LTE Standard Release 13.

Repeated transmission is the basic technology for coverage enhancement of MTC-type terminals, and a combination gain is obtained by the repeated transmission to achieve the purpose of coverage enhancement. The repeated transmission is an effective way to enhance coverage. By repeatedly transmitting the obtained gain, the channel could be enabled to carry a higher level modulation coding scheme, or a channel that cannot satisfy a certain level modulation coding scheme could be enabled to carry this level modulation coding scheme. Taking the CAT.M terminal and the LTE standard Release 13 as an example, the Physical Downlink Shared Channel (PDSCH) and the Physical Uplink Shared Channel (PUSCH) define that a maximum number of repeated transmissions is 2048. The set of the repeated transmissions is {1, 2, 4, 8, 16, 32, 64, 128, 192, 256, 384, 512,768, 1024, 1536, 2048}.

Viewed from an aspect of data transmission, the repeated transmission is to transmit the same data repeatedly by N times, which is a very inefficient way of using resources. If a MTC-type terminal of a scenario needs to transmit repeatedly by 2048 times, compared with the scenario that does not require repeatedly transmission, the repeated transmission is required to occupy 2048 times of channel resources for transmission of the same data amount.

In the current LTE system, a common practice for allocating channel resources to the terminal is to allocate a minimum number of channel resources based on the data amount to be transmitted requested by the terminal, in combination with a modulation coding scheme level that the terminal could use, so that the data amount that could be carried by these channel resources is greater than or equal to the data amount to be transmitted by the terminal.

However, for the MTC-type terminal, after the dimension of the number of repeated transmissions is increased, the common channel resource allocation method is not the most efficient use of channel resources. Smaller physical resources plus a greater number of repeated transmissions may use more channel resources than larger resources plus fewer repeated transmissions. For systems required to carry massive IoT terminals, channel resources are inherently bottlenecks. How to use limited channel resources most effectively is a problem required to be solved.

### SUMMARY

In order to solve the above technical problem, the embodiments of the present disclosure are expected to provide a method and an apparatus for allocating channel resources, and a computer storage medium, which save channel resources used for repeated transmission.

The technical solution of the embodiment of the present disclosure is implemented as follows.

In a first aspect, an embodiment of the present disclosure provides a method for allocating channel resources, the method includes:
determining a channel condition of a link where a terminal is located and the amount of service data to be transmitted by the terminal;
determining at least one set of transmission information to be chosen by the terminal, when the transmission information to be chosen is used by the terminal, a channel state meets the requirements for the channel condition of the link where the terminal is located, and the amount of transmitted data meets the requirements for the amount of service data to be transmitted by the terminal;
taking a set of transmission information to be chosen, which occupies the minimum of the total amount of channel resources, as transmission information used by the terminal; and
informing the terminal of the transmission information used by the terminal.

In an embodiment, the transmission information to be chosen includes a modulation and coding scheme to be chosen, a number of channel resources to be chosen, and a number of repeated transmissions to be chosen.

In an embodiment, the taking a set of transmission information to be chosen, which occupies the minimum of the total amount of channel resources, as transmission information used by the terminal includes:
calculating a product of each set of the number of channel resources to be chosen and the number of repeated transmissions to be chosen; and
taking a set of transmission information with a minimum product of the number of channel resources to be chosen and the number of repeated transmissions to be chosen as the transmission information used by the terminal.

In an embodiment, the determining a channel condition of a link where a terminal is located includes:
measuring the channel condition of the link where a terminal is located, and quantizing the channel condition to a channel condition value;
the determining at least one set of transmission information to be chosen by the terminal, when the transmission information to be chosen being used by the terminal, a channel state meeting the requirements for the channel condition of the link where the terminal is located, and the amount of transmitted data meeting the requirements for the amount of service data to be transmitted by the terminal, includes:
determining at least one set of a channel state value corresponding to the modulation and coding scheme to be chosen, a channel state incremental value corresponding to the number of channel resources to be chosen and a channel state incremental value corresponding to the number of repeated transmissions to be chosen by the terminal, so that a preset requirement condition is met between the channel condition value and each set of the channel state value corresponding to the modulation and coding scheme to be chosen, the channel state incremental value corresponding to the number of channel resources to be chosen and the channel state incremental value corresponding to the number of repeated transmissions to be chosen, and the number of channel resources to be chosen is capable of carrying the amount of service data to be transmitted by the terminal.

In an embodiment, the channel condition value includes at least one of a signal to interference plus noise ratio SINR value, a path loss value and a reference signal receiving power RSRP value;
correspondingly, the channel state value includes at least one of the SINR value, the path loss value, and the RSRP value; and
the channel state incremental value includes at least one of the SINR value, the path loss value, and the RSRP value.

In an embodiment, the informing the terminal of the transmission information used by the terminal includes:
informing the terminal of the transmission information value used by the terminal; or
informing the terminal of an identifier of the transmission information used by the terminal and an incremental value of the number of repeated transmissions.

In a second aspect, an embodiment of the present disclosure provides an apparatus for allocating channel resources, the apparatus includes:
a first determination module, configured to determine a channel condition of a link where a terminal is located and the amount of service data to be transmitted by the terminal;
a second determination module, configured to determine at least one set of transmission information to be chosen by the terminal, when the transmission information to be chosen is used by the terminal, a channel state meets the requirements for the channel condition of the link where the terminal is located, and the amount of transmitted data meets the requirements for the amount of service data to be transmitted by the terminal;
a first selection module, configured to take a set of transmission information to be chosen, which occupies the minimum of the total amount of channel resources, as transmission information used by the terminal; and
a first informing module, configured to inform the terminal of the transmission information used by the terminal.

In an embodiment, the transmission information to be chosen includes a modulation and coding scheme to be chosen, a number of channel resources to be chosen, and a number of repeated transmissions to be chosen.

In an embodiment, the first selection module is specifically configured to calculate a product of each set of the number of channel resources to be chosen and the number of repeated transmissions to be chosen; and take a set of transmission information with a minimum product of the number of channel resources to be chosen and the number of repeated transmissions to be chosen as the transmission information used by the terminal.

In an embodiment, the first determination module is specifically configured to measure the channel condition of the link where a terminal is located, and quantizing the channel condition to a channel condition value;
the second determination module is configured to determine at least one set of a channel state value corresponding to the modulation and coding scheme to be chosen, a channel state incremental value corresponding to the number of channel resources to be chosen and a channel state incremental value corresponding to the number of repeated transmissions to be chosen by the terminal, so that a preset requirement condition is met between the channel condition value and each set of the channel state value corresponding to the modulation and coding scheme to be chosen, the channel state incremental value corresponding to the number of channel resources to be chosen and the channel state incremental value corresponding to the number of repeated transmissions to be chosen, and the number of channel resources to be chosen is capable of carrying the amount of service data to be transmitted by the terminal.

In an embodiment, the apparatus further includes:
a third determination module, configured to determine correspondence between the modulation and coding scheme and the channel state value, determine correspondence between the number of channel resources and the channel state incremental value, and determine correspondence between the number of repeated transmissions and the channel state incremental value.

In an embodiment, the channel condition value includes at least one of a signal to interference plus noise ratio SINR value, a path loss value and a reference signal receiving power RSRP value;
correspondingly, the channel state value includes at least one of the SINR value, the path loss value, and the RSRP value; and
the channel state incremental value includes at least one of the SINR value, the path loss value, and the RSRP value.

In an embodiment, the first informing module is specifically configured to inform the terminal of the transmission information value used by the terminal; or inform the terminal of an identifier of the transmission information used by the terminal and an incremental value of the number of repeated transmissions.

According to the method and the apparatus for allocating channel resources and the computer storage medium provided by the embodiment of the present disclosure, firstly, the channel condition of a link where a terminal is located and the amount of service data to be transmitted by the terminal are determined, then at least one set of transmission information to be chosen by the terminal is determined, when each set of the transmission information to be chosen is used by the terminal, a channel state meets the requirements for the channel condition of the link where the terminal is located, and the amount of transmitted data meets the requirements for the amount of service data to be transmitted by the terminal, a set of transmission information to be chosen, that occupies the minimum of the total amount of channel resources, is taken as transmission information used by the terminal and informed to the terminal, so that the total amount of channel resources used by the terminal for data transmission is minimized, and channel resources are saved.

### BRIEF DESCRIPTION OF THE DRAWINGS

FIG. 1 is a flowchart illustrating a method for allocating channel resources according to an embodiment of the present disclosure;
FIG. 2 is a block diagram illustrating an apparatus for allocating channel resources according to an embodiment of the present disclosure;
FIG. 3 is a block diagram illustrating an apparatus for allocating channel resources according to another embodiment of the present disclosure.

### DETAILED DESCRIPTION

The technical solutions in the embodiments of the present disclosure are clearly and completely described in the following with reference to the accompanying drawings in the embodiments of the present disclosure.

In wireless communication, the channel resources are very limited. After the introduction of the MTC-type terminal, massive number of terminals leads to insufficient channel resources. Since the MTC-type terminal has low requirements for real-time communication and information volume, the way of reducing bandwidth, data transmission speed and the like can be used to reduce the demand of the terminal for channel resources. In addition, some MTC-type terminals have less power for communication for power saving purposes, resulting in limited transmission and reception capabilities of the terminals.

In order to improve the communication capability of the MTC-type terminal, a repeated transmission technology is configured for the MTC-type terminal. The repeated transmission is the basic technology for coverage enhancement of MTC-type terminals, and the combination gain is obtained by repeated transmission to achieve the purpose of coverage enhancement. The repeated transmission is an effective way of coverage enhancement. By repeatedly transmitting the obtained gain, the channel could be enabled to carry a higher level modulation coding scheme, or a channel that cannot satisfy a certain level modulation coding scheme could be enabled to carry this level modulation coding scheme. For the MTC-type terminal, the number of repeated transmissions can only be chosen in a limited set. Taking the LTE standard Release 13 as an example, the Physical Downlink Shared Channel (PDSCH) and the Physical Uplink Shared Channel (PUSCH) define that a maximum number of repeated transmissions is 2048. The set of the repeated transmissions is {1, 2, 4, 8, 16, 32, 64, 128, 192, 256, 384, 512, 768, 1024, 1536, 2048}.

When the channel resources are allocated to the terminal, for the purpose of saving channel resources, a minimum number of channel resources are allocated to the terminal firstly according to the modulation and coding scheme that the terminal can use, so that the data amount that could be carried by these channel resources is greater than or equal to the data amount to be transmitted by the terminal, then the corresponding number of repeated transmission are allocated to the terminal according to the requirement of the coverage enhancement for the terminal, and finally various parameters used by the terminal for data transmission are obtained. However, after the number of repeated transmissions is introduced, the repeated transmission by N times is equivalent to the total amount of occupied channel resources being N times of the minimum number of channel resources allocated to the terminal, and therefore, after the minimum number of channel resources allocated to the terminal are transmitted repeatedly according to the current channel resource allocation way, the total amount of channel resources occupied is not necessarily minimal. For example, the base station side needs to transmit 254 bits of data to the MTC-type terminal. In order to match the channel condition of the MTC-type terminal, and after adding the dimension of the number of repeated transmissions, there are different schemes for resource allocation, and two of them are listed.

The first one is that the terminal uses Modulation and Coding Scheme (MCS) 6, and three Resource Blocks (RBs) are used to carry 256 bits of data, which satisfies the requirement of the terminal receiving 254 bits of data, in order to meet the coverage enhancement requirement, the number of repeated transmissions is 128. Then the total occupation amount of the downlink channel resources is 3x128=348 RBs. The second is that the terminal uses MCS 3, and 5 RBs are used to carry 256 bits of data, which satisfies the requirement of the terminal receiving 254 bits of data. In order to meet the coverage enhancement requirement, the number of repeated transmissions is 64. Then the total occupation amount of the downlink channel resources is 5x64=320 RBs.

As can be seen from the above example, although the first resource allocation scheme allocates less channel resources to the terminal, the second resource allocation scheme occupies less total resources after the repeated transmission is introduced. In addition, at present, for the number of repeated transmissions of the MTC-type terminal, only the defined number of repeated transmissions can be chosen in a set of the limited number of transmission, and the values in the set are discontinuous, and the number of repeated transmissions is selected in the set, and which may also result in a waste of the channel resources.

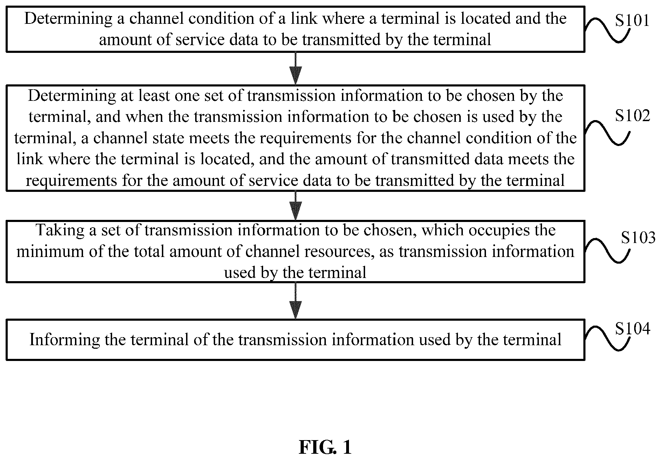

FIG. 1 is a flowchart illustrating a method for allocating channel resources according to an embodiment of the present disclosure. As shown in FIG. 1, the method provided by the embodiment includes steps S101-S104.

In step S101, a channel condition of a link where a terminal is located and the amount of service data to be transmitted by the terminal are determined.

Since the current channel resource allocation scheme for the MTC-type terminal does not take into account the total amount of channel resources occupied by the terminal when performing repeated transmission, the scheme for allocating channel resources to the terminal is not most preferable. Therefore, the method for allocating channel resource provided in this embodiment determines the channel condition of the link where the terminal is located, and the amount of service data to be transmitted, and then selects a suitable transmission resource for the terminal, so that the total amount of channel resources used for transmission output by the terminal is minimal, and meet demand of the amount of service data to be transmitted by the terminal.

The execution subject of this embodiment is a control management network element in the network, or a network element or a network function responsible for performing transmission resource management in the network. Firstly, it is necessary to determine the channel condition of the link where the terminal is located, and the amount of service data to be transmitted by the terminal. Since data transmission of the terminal is divided into two cases of sending and reception, the channel resources used for sending and reception may be different. Therefore, when determining the channel condition of the link where the terminal is located and the amount of service data to be transmitted by the terminal, it is firstly necessary to determine whether the terminal needs to send or receive data. Then the channel condition of the link, where the terminal having data to be transmitted is located, is determined, the channel condition of the terminal may be measured by the terminal or the base station on the network side, and at least one parameter for characterizing the channel condition of the link where the terminal is located is determined. The amount of service data to be transmitted by the terminal is determined by the base station during downlink transmission, and is determined by the terminal and informed to the base station on the network side during uplink transmission.

In step S102, at least one set of transmission information to be chosen by the terminal is determined, when the transmission information to be chosen is used by the terminal, a channel state meets the requirements for the channel condition of the link where the terminal is located, and the amount of transmitted data meets the requirements for the amount of service data to be transmitted by the terminal.

The data transmission of the terminal needs to determine one or more transmission information to be chosen for configuring the transmission resource, and each set of transmission information to be chosen may be configured to the terminal, so that the terminal uses the parameters in the transmission information to be chosen for data transmission. When each set of transmission information to be chosen is used by the terminal, the channel state meets the requirements for the channel condition of the link where the terminal is located, and the amount of transmitted data meets the requirements for the amount of service data to be transmitted by the terminal.

Specifically, the transmission information to be chosen includes three parameters: a modulation and coding scheme to be chosen, a number of channel resources to be chosen, and a number of repeated transmissions to be chosen. The number of channel resources to be chosen may specifically include the number of code channels to be chosen. The first is the modulation and coding scheme used by the terminal, and various communication protocols allocate different optional channel resource allocation schemes for different modulation and coding schemes, and then the corresponding number of channel resources is chosen in the optional channel resource allocation schemes, and finally the number of repeated transmissions is chosen as required. After the modulation and coding scheme, the number of channel resources, and the number of repeated transmissions are chosen, these three parameters become the transmission parameters for data transmission of the terminal. An optional combination of the transmission parameters for the terminal may include one or more, different combination of the transmission parameters could adapt to different channel conditions. Therefore, the combination of the transmission parameters, that meets the channel condition of the link where the terminal is located as determined in step S101, can be chosen from the optional combination of the transmission parameters for the terminal. The channel conditions that could be met by different combinations of transmission parameters may be preset, or may be calculated according to each parameter in the combination of the transmission parameters. The terminal modulation and coding scheme, the number of channel resources, and the number of repeated transmissions, meeting the requirements for the channel condition of the link where the terminal is located, are combined as the modulation and coding scheme to be chosen, the number of channel resources to be chosen, and the number of repeated transmissions to be chosen by the terminal. In addition, in the combination of modulation and coding scheme to be chosen, the number of channel resources to be chosen, and the number of repeated transmissions to be chosen by the terminal, the number of channel resources could be able to meet the requirements of the amount of service data to be transmitted by the terminal.

And at least one set of transmission information to be chosen by the terminal is determined, when the transmission information to be chosen is used by the terminal, a channel state meets the requirements for the channel condition of the link where the terminal is located, and the amount of transmitted data meets the requirements for the amount of service data to be transmitted by the terminal, including:

At least one set of a channel state value corresponding to the modulation and coding scheme to be chosen, a channel state incremental value corresponding to the number of channel resources to be chosen and a channel state incremental value corresponding to the number of repeated transmissions to be chosen by the terminal is determined, so that a preset requirement condition is met between the channel condition value and each set of the channel state value corresponding to the modulation and coding scheme to be chosen, the channel state incremental value corresponding to the number of channel resources to be chosen and the channel state incremental value corresponding to the number of repeated transmissions to be chosen, and the number of channel resources to be chosen is capable of carrying the amount of service data to be transmitted by the terminal.

Specifically, the preset requirements could preferably be the sum of the channel state value corresponding to the modulation and coding scheme to be chosen, the channel state incremental value corresponding to the number of channel resources to be chosen and the channel state incremental value corresponding to the number of repeated transmissions to be chosen to meet the requirements of the channel condition value. It can be understood that, in this embodiment, the requirement condition may not be limited to the requirement that the sum of the above three meets the channel condition value, and a person skilled in the art may set the requirement condition according to an actual situation.

It should be noted that, during downlink transmission at the terminal, the terminal is in a receiving state, the number of repeated transmissions refers to the number of repeated transmissions of data sent by the base station to the terminal, and the terminal is in a repeated receiving state; and during uplink transmission at the terminal, the terminal is in a transmitting state, the number of repeated transmissions refers to the number of repeated data sent by the terminal.

In step S103, a set of transmission information to be chosen, that occupies the minimum of the total amount of channel resources, is taken as transmission information used by the terminal.

At least one set of transmission information to be chosen is determined in the step S102, using each set of transmission information to be chosen for data transmission by the terminal meets the data transmission requirements of the terminal. However, the total amount of channel resources occupied by each set of transmission information to be chosen may be different. In order to save channel resources, a set of transmission information to be chosen, that occupies the minimum of the total amount of channel resources, is taken as the number of channel resources, the number of repeated transmissions, and the modulation and coding scheme used by the terminal.

When the transmission information to be chosen includes the combination of the modulation and coding scheme to be chosen, the number of channel resources to be chosen, and the number of repeated transmissions to be chosen, in order to save channel resources, a set of the modulation and coding scheme to be chosen, the number of channel resources to be chosen, and the number of repeated transmissions to be chosen, that occupies the minimum of the total amount of channel resources, is taken as the number of channel resources, the number of repeated transmissions, and the modulation and coding scheme used by the terminal.

Specifically, a product of each set of the number of channel resources to be chosen and the number of repeated transmissions to be chosen is calculated. A set of the modulation and coding scheme to be chosen, the number of channel resources to be chosen, and the number of repeated transmissions to be chosen, with a minimum product of the number of channel resources to be chosen and the number of repeated transmissions to be chosen, is taken as the number of channel resources, the number of repeated transmissions, and the modulation and coding scheme used by the terminal.

In step S104, the terminal is informed of the transmission information used by the terminal.

After the transmission information used by the terminal is determined, the transmission information used by the terminal is required to be informed to the terminal, so that the terminal uses these parameters for data transmission.

When the transmission information to be chosen includes the modulation and coding scheme, the number of channel resources, and the number of repeated transmissions used by the terminal, after the modulation and coding scheme, the number of channel resources, and the number of repeated transmissions used by the terminal are determined, the modulation and coding scheme, the number of channel resources, and the number of repeated transmissions used by the terminal are required to be informed to the terminal, so that the terminal uses these parameters for data transmission.

According to the method for allocating channel resources provided by the embodiment of the present disclosure, firstly, the channel condition of a link where a terminal is located and the amount of service data to be transmitted by the terminal are determined, then at least one set of transmission information to be chosen by the terminal is determined, when each set of the transmission information to be chosen is used by the terminal, a channel state meets the requirements for the channel condition of the link where the terminal is located, and the amount of transmitted data meets the requirements for the amount of service data to be transmitted by the terminal, a set of transmission information to be chosen, that occupies the minimum of the total amount of channel resources, is taken as transmission information used by the terminal and informed to the terminal, so that the total amount of channel resources used by the terminal for data transmission is minimized, and channel resources are saved.

In the embodiment shown in FIG. 1, the channel condition of the link where a terminal is located is measured and the channel condition is quantized to a channel condition value. The channel condition value may be any parameter value capable of reacting to channel conditions, for example, the channel condition value includes at least one of a Signal to Interference plus Noise Ratio (SINR) value, a path loss value, and a Reference Signal Receiving Power (RSRP) value. Correspondingly, the channel state value includes at least one of the SINR value, the path loss value, and the RSRP value; and the channel state incremental value includes at least one of the SINR value, the path loss value, and the RSRP value. Here, the channel condition value, the channel state value, and the channel state incremental value are required to be chosen for the same type of parameter to be comparable.

In step S102, each set of the combination of the modulation and coding scheme to be chosen, the number of channel resources to be chosen, and the number of repeated transmissions to be chosen by the terminal may also correspond to a quantized channel state value, as long as it is determined whether the quantized channel state value meets the demand for the quantized channel condition value. The quantized channel state value and the quantized channel condition value are required to be represented by the same quantization parameter, for example, both are SINR values or RSRP values. The combination of the modulation and coding scheme to be chosen, the number of channel resources to be chosen, and the number of repeated transmissions to be chosen by the terminal may be multiple. It takes more storage space to preset corresponding quantized channel state value for each combination. Therefore, it is also determined that the correspondence between each modulation and coding scheme and the channel state value is predetermined, the correspondence between the number of channel resources and the channel state incremental value is determined, and the correspondence between the number of repeated transmissions and the channel state incremental value is determined. That is, it is determined that how much each modulation and coding scheme affects the channel state value, it is determined that how much the number of different channel resources affects the channel state value, and it is determined that how much the number of different signal repetition transmissions affects the channel state value. Then, after each set of the modulation and coding scheme to be chosen, the number of channel resources to be chosen, and the number of repeated transmissions to be chosen is determined, the channel state value corresponding to each parameters may be added to become the channel state value corresponding to each set of the modulation and coding scheme to be chosen, the number of channel resources to be chosen, and the number of repeated transmissions to be chosen. In this way, each channel state value or the channel state incremental value corresponding to the modulation and coding scheme to be chosen, the number of channel resources to be chosen, and the number of repeated transmissions to be chosen may be stored in advance, compared with storing channel state value corresponding to each combination, the storage space is saved.

In the embodiment shown in FIG. 1, the number of repeated transmissions to be chosen may be chosen in a preset combination of the number of repeated transmissions, or the number of repeated transmissions to be chosen may be calculated according to the influence of different number of repeated transmissions on the requirements for the channel condition. Therefore, when the modulation and coding scheme, the number of channel resources, and the number of repeated transmissions used by the terminal are informed to the terminal, an identifier corresponding to the number of repeated transmissions in the set of the number of repeated transmissions may be informed to the terminal; or the calculated number of repeated transmissions may be informed to the terminal directly; after the number of repeated transmissions is calculated, the identifier and the incremental value of the number of repeated transmissions in the set of the number of repeated transmissions are informed to the terminal. Since there are only a limited discontinuous number of repeated transmissions in the current set of the number of repeated transmissions, if the number of repeated transmissions in the current set of the number of repeated transmissions is chosen, only the identifier corresponding to the number of repeated transmissions in the set of the number of repeated transmissions may be informed to the terminal, and the terminal may learn the number of repeated transmissions. In order to further save channel resources, the number of repeated transmissions in the current set of the number of repeated transmissions may not be chosen to use, and the number of repeated transmissions may be determined according to the requirements for the channel condition of the link where the terminal is located in step S102, if it is not in the current set of the number of repeated transmissions, then it is necessary to inform the terminal of the number of repeated transmissions, for example, the number of repeated transmissions is 1058. After determining the number of repeated transmissions, an identifier corresponding to the set of the number of repeated transmissions and an incremental value corresponding to the number of repeated transmissions may be informed to the terminal, so as to reduce the amount of data informed to the terminal, for example, the number of repeated transmissions is 1058, the identifier corresponding to the set of the number of repeated transmissions of 1536 times and the incremental value of 22 times may be sent to the terminal.

In addition, Downlink Control Information (DCI) could be used to inform the terminal of the modulation and coding scheme, the number of channel resources, and the number of repeated transmissions used by the terminal. Certainly, the modulation and coding scheme, the number of channel resources, and the number of repeated transmissions used by the terminal may be carried in other available channels or information and sent to the terminal.

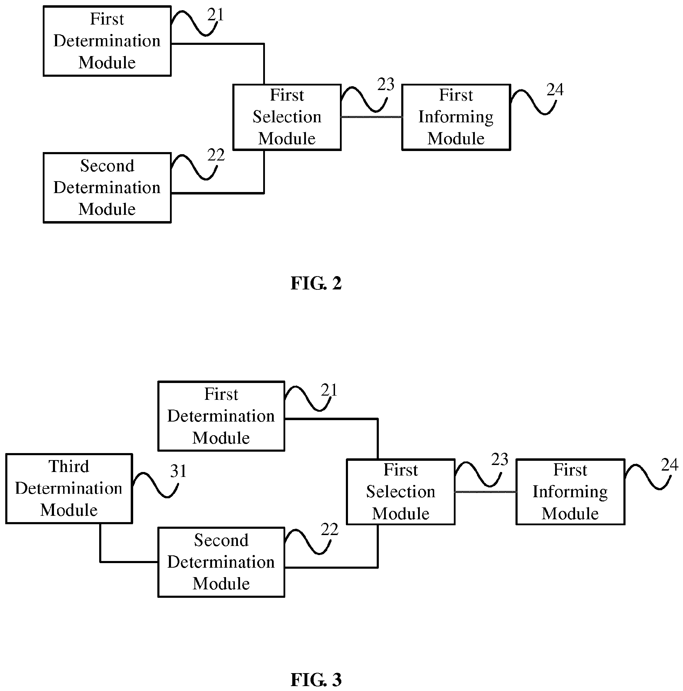

FIG. 2 is a block diagram illustrating an apparatus for allocating channel resources according to an embodiment of the present disclosure. As shown in FIG. 2, the apparatus for allocating channel resources provided by the embodiment includes a first determination module 21, a second determination module 22, a first selection module 23, and a first informing module 24.

The first determination module 21 is configured to determine a channel condition of a link where a terminal is located and the amount of service data to be transmitted by the terminal.

The second determination module 22 is configured to determine at least one set of transmission information to be chosen by the terminal, when the transmission information to be chosen is used by the terminal, a channel state meets the requirements for the channel condition of the link where the terminal is located, and the amount of transmitted data meets the requirements for the amount of service data to be transmitted by the terminal.

The first selection module 23 is configured to take a set of transmission information to be chosen, which occupies the minimum of the total amount of channel resources, as transmission information used by the terminal.

The first informing module 24 is configured to inform the terminal of the transmission information used by the terminal.

The apparatus for allocating channel resources provided in this embodiment is used to implement the technical solution of the method for allocating channel resources shown in FIG. 1, and the implementation principle and technical effects thereof are similar, and details are not described herein again.

As an implementation manner, in the embodiment shown in FIG. 2, the transmission information to be chosen includes a modulation and coding scheme to be chosen, a number of channel resources to be chosen, and a number of repeated transmissions to be chosen.

As an implementation manner, in the embodiment shown in FIG. 2, the first selection module 23 is specifically configured to calculate a product of each set of the number of channel resources to be chosen and the number of repeated transmissions to be chosen; and take a set of transmission information with a minimum product of the number of channel resources to be chosen and the number of repeated transmissions to be chosen as the transmission information used by the terminal.

As an implementation manner, in the embodiment shown in FIG. 2, the first determination module 21 is specifically configured to measure the channel condition of the link where a terminal is located, and quantizing the channel condition to a channel condition value; the second determination module 22 is configured to determine at least one set of a channel state value corresponding to the modulation and coding scheme to be chosen, a channel state incremental value corresponding to the number of channel resources to be chosen and a channel state incremental value corresponding to the number of repeated transmissions to be chosen by the terminal, so that requirement of the channel condition value is met a sum of each set of the channel state value corresponding to the modulation and coding scheme to be chosen, the channel state incremental value corresponding to the number of channel resources to be chosen and the channel state incremental value corresponding to the number of repeated transmissions to be chosen, and the number of channel resources to be chosen is capable of carrying the amount of service data to be transmitted by the terminal.

FIG. 3 is a block diagram illustrating an apparatus for allocating channel resources according to another embodiment of the present disclosure. As shown in FIG. 3, the apparatus for allocating channel resources provided in this embodiment further includes a third determination module 31 on the basis of the FIG. 2.

The third determination module 31 is configured to determine correspondence between the modulation and coding scheme and the channel state value, determine correspondence between the number of channel resources and the channel state incremental value, and determine correspondence between the number of repeated transmissions and the channel state incremental value.

In an embodiment, in the embodiment shown in FIG. 2 or FIG.3, the channel condition value includes at least one of a SINR value, a path loss value and a RSRP value; correspondingly, the channel state value includes at least one of the SINR value, the path loss value, and the RSRP value; and the channel state incremental value includes at least one of the SINR value, the path loss value, and the RSRP value.

In an embodiment, in the embodiment shown in FIG. 2 or FIG.3, the first informing module 24 is specifically configured to inform the terminal of the transmission information value used by the terminal; or inform the terminal of an identifier of the transmission information used by the terminal and an incremental value of the number of repeated transmissions.

In an embodiment, in the embodiment shown in FIG. 2 or FIG.3, the first informing module 24 is specifically configured to inform the terminal of the chosen transmission information by DCI.

In practical applications, the functions implemented by each unit in the apparatus for allocating channel resources may be implemented by a Central Processing Unit (CPU) or a Micro Processor Unit (MPU), or a Digital Signal Processor (DSP), or Field Programmable Gate Array (FPGA) located in the apparatus for allocating channel resources.

In the embodiment of the present disclosure, the apparatus for allocating channel resources may be stored in a computer readable storage medium if it is implemented in the form of a software function module and sold or used as a separate product. Based on such understanding, the technical solutions of the present disclosure substantively, or a part thereof making a contribution to the prior art, may be reflected in the form of computer software product stored in a storage medium, and it include several instructions to enable a computer equipment (e.g., personal computer, server, network facility, etc.) to execute the methods of respective embodiments or certain parts thereof in the present disclosure. The foregoing storage medium includes a flash disk, a removable hard disk, a Read Only Memory (ROM), magnetic disks, or an optical disk and various mediums capable of storing program codes.

Correspondingly, the embodiment of the present disclosure further provides a computer storage medium for storing the computer program configured for execution of the method for allocating channel resources according to the embodiment of the present disclosure.

The above are only preferred embodiments of the present disclosure and are not intended to limit the present disclosure.

### INDUSTRIAL APPLICABILITY

The technical scheme is provided by the embodiment of the present disclosure, firstly, the channel condition of a link where a terminal is located and the amount of service data to be transmitted by the terminal are determined, then at least one set of transmission information to be chosen by the terminal is determined, when each set of the transmission information to be chosen is used by the terminal, a channel state meets the requirements for the channel condition of the link where the terminal is located, and the amount of transmitted data meets the requirements for the amount of service data to be transmitted by the terminal, a set of transmission information to be chosen, that occupies the minimum of the total amount of channel resources, is taken as transmission information used by the terminal and informed to the terminal, so that the total amount of channel resources used by the terminal for data transmission is minimized, and channel resources are saved.

## Claims

1. A method for allocating channel resources, comprising:
determining a channel condition of a link where a terminal is located and amount of service data to be transmitted by the terminal;
determining at least one set of transmission information to be chosen by the terminal, when the transmission information to be chosen is used by the terminal, a channel state meets requirements for the channel condition of the link where the terminal is located, and amount of transmission data meets requirements for the amount of service data to be transmitted by the terminal;
taking a set of transmission information to be chosen, occupying minimum total amount of channel resources, as transmission information used by the terminal; and
informing the terminal of the transmission information as taken.

2. The method according to claim 1, wherein, the transmission information to be chosen comprises a modulation and coding scheme to be chosen, a number of channel resources to be chosen, and a number of repeated transmissions to be chosen.

3. The method according to claim 2, wherein, the taking a set of transmission information to be chosen, occupying minimum total amount of channel resources, as transmission information used by the terminal comprises:
calculating a product of each set of the number of channel resources to be chosen and the number of repeated transmissions to be chosen; and
taking a set of transmission information with a minimum product of the number of channel resources to be chosen and the number of repeated transmissions to be chosen as the transmission information used by the terminal.

4. The method according to claim 2 or 3, wherein, the determining a channel condition of a link where a terminal is located comprises:
measuring the channel condition of the link where the terminal is located, and quantizing the channel condition to a channel condition value;
the determining at least one set of transmission information to be chosen by the terminal, when the transmission information to be chosen being used by the terminal, a channel state meeting requirements for the channel condition of the link where the terminal is located, and amount of transmission data meeting requirements for the amount of service data to be transmitted by the terminal, comprises:
determining at least one set of a channel state value corresponding to the modulation and coding scheme to be chosen, a channel state incremental value corresponding to the number of channel resources to be chosen, and a channel state incremental value corresponding to the number of repeated transmissions to be chosen by the terminal, causing a preset requirement condition to be met by the channel condition value and each set of the channel state value corresponding to the modulation and coding scheme to be chosen, the channel state incremental value corresponding to the number of channel resources to be chosen and the channel state incremental value corresponding to the number of repeated transmissions to be chosen, and the number of channel resources to be chosen being capable of carrying the amount of service data to be transmitted by the terminal.

5. The method according to claim 4, wherein, the channel condition value comprises at least one of a signal to interference plus noise ratio SINR value, a path loss value and a reference signal receiving power RSRP value;
the channel state value comprises at least one of the SINR value, the path loss value, and the RSRP value; and
the channel state incremental value comprises at least one of the SINR value, the path loss value, and the RSRP value.

6. The method according to any one of claims 1-3, wherein, the informing the terminal of the transmission information as taken comprises:
informing the terminal of transmission information value used by the terminal; or
informing the terminal of an identifier of the transmission information used by the terminal and an incremental value of the number of repeated transmissions.

7. An apparatus for allocating channel resources, the apparatus comprising:
a first determination module, configured to determine a channel condition of a link where a terminal is located and amount of service data to be transmitted by the terminal;
a second determination module, configured to determine at least one set of transmission information to be chosen by the terminal, when the transmission information to be chosen is used by the terminal, a channel state meets requirements for the channel condition of the link where the terminal is located, and amount of transmission data meets requirements for the amount of service data to be transmitted by the terminal;
a first selection module, configured to take a set of transmission information to be chosen, occupying minimum total amount of channel resources, as transmission information used by the terminal; and
a first informing module, configured to inform the terminal of the transmission information as taken.

8. The apparatus according to claim 7, wherein, the transmission information to be chosen comprises a modulation and coding scheme to be chosen, a number of channel resources to be chosen, and a number of repeated transmissions to be chosen.

9. The apparatus according to claim 8, wherein, the first selection module is further configured to calculate a product of each set of the number of channel resources to be chosen and the number of repeated transmissions to be chosen; and take a set of transmission information with a minimum product of the number of channel resources to be chosen and the number of repeated transmissions to be chosen as the transmission information used by the terminal.

10. The apparatus according to claim 8 or 9, wherein, the first determination module is further configured to measure the channel condition of the link where the terminal is located, and quantize the channel condition to a channel condition value;
the second determination module is configured to determine at least one set of a channel state value corresponding to the modulation and coding scheme to be chosen, a channel state incremental value corresponding to the number of channel resources to be chosen and a channel state incremental value corresponding to the number of repeated transmissions to be chosen by the terminal, causing a preset requirement condition to be met by the channel condition value and each set of the channel state value corresponding to the modulation and coding scheme to be chosen, the channel state incremental value corresponding to the number of channel resources to be chosen and the channel state incremental value corresponding to the number of repeated transmissions to be chosen, and the number of channel resources to be chosen being capable of carrying the amount of service data to be transmitted by the terminal.

11. The apparatus according to claim 10, wherein, the apparatus further comprises:
a third determination module, configured to determine correspondence between the modulation and coding scheme and the channel state value, determine correspondence between the number of channel resources and the channel state incremental value, and determine correspondence between the number of repeated transmissions and the channel state incremental value.

12. The apparatus according to claim 10, wherein, the channel condition value comprises at least one of a signal to interference plus noise ratio SINR value, a path loss value and a reference signal receiving power RSRP value;
the channel state value comprises at least one of the SINR value, the path loss value, and the RSRP value; and
the channel state incremental value comprises at least one of the SINR value, the path loss value, and the RSRP value.

13. The apparatus according to any one of claims 7-9, wherein, the first informing module is further configured to inform the terminal of transmission information value used by the terminal; or inform the terminal of an identifier of the transmission information used by the terminal and an incremental value of the number of repeated transmissions.

14. A computer storage medium having stored thereon computer executable instructions configured to perform a method for allocating channel resources according to any one of claims 1-6.
